(19) Europäisches Patentamt
European Patent Office
Office européen des brevets

(11) **EP 1 627 893 B1**

(12) **EUROPEAN PATENT SPECIFICATION**

(45) Date of publication and mention
of the grant of the patent:
**12.10.2011 Bulletin 2011/41**

(51) Int Cl.:
*C08J 5/18* (2006.01)   *B29C 55/02* (2006.01)
*C08L 101/16* (2006.01)   *C08L 67/04* (2006.01)

(21) Application number: **03733085.9**

(22) Date of filing: **27.05.2003**

(86) International application number:
**PCT/JP2003/006582**

(87) International publication number:
**WO 2004/106417 (09.12.2004 Gazette 2004/50)**

(54) **BIODEGRADABLE RESIN FILM OR SHEET AND PROCESS FOR PRODUCING THE SAME**

FILM ODER FOLIE AUS BIOLOGISCH ABBAUBAREM HARZ UND HERSTELLUNGSVERFAHREN DAFÜR

FILM OU FEUILLE DE RESINE BIODEGRADABLE ET SON PROCEDE DE FABRICATION

(84) Designated Contracting States:
**AT BE BG CH CY CZ DE DK EE ES FI FR GB GR HU IE IT LI LU MC NL PT RO SE SI SK TR**

(43) Date of publication of application:
**22.02.2006 Bulletin 2006/08**

(73) Proprietor: **Asahi Kasei Life & Living Corporation Chiyoda-ku Tokyo 100-8440 (JP)**

(72) Inventors:
• **ITADA, Mitsuyoshi**
**Suzuka-shi, Mie 513-0804 (JP)**
• **SUKIGARA, Masayuki**
**Suzuka-shi, Mie 510-0263 (JP)**

(74) Representative: **Bradley, Josephine Mary et al**
**D Young & Co LLP**
**120 Holborn**
**London EC1N 2DY (GB)**

(56) References cited:
JP-A- 11 124 495      JP-A- 2000 273 207
JP-A- 2002 097 350    JP-A- 2002 127 343
JP-A- 2002 173 520    JP-A- 2003 119 302
JP-A- 2003 136 592    JP-A- 2003 160 675
JP-A- 2003 181 919

## Description

## Technical Field

The present invention relates to a biodegradable resin drawn film or biodegradable resin drawn sheet that has excellent transparency, impact resistance and film re-forming capability (recyclability); and a process for producing the same. Particularly, it relates to a heat shrinkable or heat non-shrinkable drawn film or sheet, specifically a biodegradable resin drawn film or biodegradable resin drawn sheet that is advantageously used for wrapping an article such as an over-wrapping shrinkable film or over-wrapping molded sheet used for lunch boxes, containers for prepared food or the like and a non-shrinkable film or sheet used for bags with a zip, paper boxes with a transparent outlook window; and a process for producing the same.

## Background Art

Examples of resin materials excellent in transparency, impact resistance and film re-forming capability (recyclability) are materials such as polyethylene terephthalate, polypropylene and polyethylene, and these have been widely used. However, in view of protecting the natural environment in relation to the disposal of these resin materials, there is a demand for materials which have low combustion calories, are degradable in the soil and safe. There has been active research on products made of a biodegradable resin such as an aliphatic polyester like polylactic acid polymer, specifically containers or molded articles such as a film, a sheet and a bottle, fibers, non-woven fabric, expanded articles, and composite materials thereof.

The polylactic acid polymer is a polycondensate having an optical active center and optical purity (OP; unit: %) calculated from the following equation based on the composition ratio of L-lactic acid and/or D-lactic acid monomer unit composing the polymer.

$$OP = \left| [L] - [D] \right|$$

wherein [L] + [D] = 100; [L] is a weight % of L-lactic acid composing polylactic acid polymer; [D] is a weight % of D-lactic acid polymer composing polylactic acid polymer, and represents an absolute value of the calculated value [L] - [D].

A polylactic acid polymer having an optical purity of greater than or equal to 80 % and that having an optical purity of lower than 80 % will be crystalline and amorphous, respectively. Compared to other biodegradable resins, a polylactic acid polymer is more excellent in transparency and rigidity due to it having a haze value (according to ASTM-D 1003-95) of about less than 4 % and tensile modulus (according to ASTM-D 882-95a) of about 2 to 5 GPa, but it is brittle at room temperature (23˚C) because of having a glass transition temperature Tg of about 60˚C which is far higher than those of other biodegradable resins. Further, even a crystalline polylactic acid polymer having an extremely high crystallization temperature of about 100˚C and an optical purity of greater than or equal to 80 % will be amorphous when the polymer in the molten state is quenched. Therefore, a polylactic acid polymer can be easily molded at a temperature ranging from the glass transition temperature to the crystallization temperature (about 50 to 100˚C) and, in particular, articles in the form of a film or sheet obtained by drawing or heat treatment will have high mechanical strength, i.e., tensile breaking strength (according to ASTM-D 882-95a) of about 70 to 300 MPa, and excellent machine adaptability which is required upon continuous cut processing of a rolled whole film so that the articles are suitable for various wrapping films or sheets which are required to have high transparency.

However, because polylactic acid polymers intrinsically have a brittleness, they are disadvantageously inferior in impact resistance which is required upon transportation of wrapped articles. Therefore, it has been attempted to improve the impact resistance by incorporating a biodegradable aliphatic polyester other than the polylactic acid polymer which biodegradable aliphatic polyester has a low glass transition temperature Tg (less than or equal to 5˚C) and good impact resistance. Herein, the biodegradable aliphatic polyester other than polylactic acid polymer includes aliphatic aromatic polyesters containing aromatic components in the range where the biodegradability is not deteriorated and specifically crystalline resins such as a polycondensed aliphatic polyester derived mainly from an aliphatic dicarboxylic acid and an aliphatic diol; a polycondensed aliphatic aromatic polyester derived mainly from an aromatic dicarboxylic acid and an aliphatic diol; an aliphatic polyester obtained by ring-opening polymerization of cyclic lactones; a synthetic aliphatic polyester; and an aliphatic polyester biosynthesized in a fungus body. The crystalline resins have a crystalline melting point of 60 to 150˚C and a glass transition temperature of less than or equal to the room temperature (23˚C). Although the resins are rubbery at the room temperature and exhibit impact resistance, they exhibit poor transparency because crystallization proceeds so that the crystal size of the resins is likely to become large even if the crystalline resins in the molten state are quenched. Consequently, as to a film or sheet made of a mixture comprising a polylactic acid polymer and a biodegradable aliphatic polyester other than polylactic acid polymer, there has not yet been achieved a polylactic acid film or sheet excellent in film re-forming capability (recyclability) and which has satisfactorily improved impact resistance and high transparency even when recycled raw materials utilizing wastes generated upon film or sheet production are used; and a process for producing the same.

The following are examples of a polylactic acid drawn film and sheet made of the polylactic acid resin composed mainly of the mixture of lactic acid polymer and biodegradable aliphatic polyester having a glass transition temperature Tg of less than or equal to 5°C:

> JP-A-9-111107 discloses a sheet prepared by uniaxially drawing a polylactic acid resin with a casting roll so that the thickness thereof is 1/3 times the height of a die lip opening, a discharge port of molten resin (i.e., three times at an area ratio based on the die lip opening); JP-A-2000-273207 discloses a sheet prepared by biaxially drawing a polylactic acid resin according to 8.89 × 2.25 time (20 times at an area ratio based on the die lip opening) inflation method so that the thickness thereof be 1/20 times the height of a die lip opening; and JP-A-2001-130183 discloses a film or sheet prepared by 2.4 × 3.1 time (7.4 times at an area ratio based on the die lip opening) drawing with a casting roll and tenter. However, all of the films and sheets prepared according to these prior documents are disadvantageously inferior in transparency because the haze value of all of the films and sheets reaches greater than or equal to 5 % when the ratio of the biodegradable aliphatic polyester in the mixture of polylactic acid polymer and biodegradable aliphatic polyester is greater than or equal to 10 % and it cannot be said that this transparency is a level suitable for practical uses.

Further, JP-A-2001-151906 discloses that a film or sheet prepared by subjecting a polylactic acid resin, wherein the melt viscosities of polylactic acid polymer and biodegradable aliphatic polyester which has a glass transition temperature Tg of less than or equal to 0°C are in a certain relation, to 1.02 × 5.0 time (5.1 times at an area ratio based on the die lip opening) drawing with a casting loll and a tenter is improved in transparency. However, the haze value of the resultant film or sheet is 6 to 10 %, and sufficient transparency is not achieved. When trim scrap generated upon forming a film or sheet made of polylactic acid resin is pelletized by extrusion for use as a recycled raw material, the molecular weight of the recycled polylactic acid resin is decreased and the relation of the melt viscosity deviates from a certain range. Thus, depending on the number of times the material has been recycled and the ratio of the recycled raw material to be incorporated, the transparency of the resultant film or sheet can deteriorate to a haze value exceeding 10 %. Thus, the film or sheet disclosed in this document has a problem in film re-forming capability (recyclability).

The present invention provides a biodegradable drawn film or sheet having excellent transparency, impact resistance and film re-forming capability (recyclability), a process for producing the same, and further wrapping material and composite material composed of the same.

**Description of the Invention**

> 1) A biodegradable resin drawn film or biodegradable resin drawn sheet comprising mainly a mixture comprising (A) a biodegradable resin having a glass transition temperature Tg of greater than or equal to 30°C according to the differential scanning calorimetry (JIS-K 7121) and (B) a biodegradable resin having a glass transition temperature of less than or equal to 5°C according to the differential scanning calorimetry (JIS-K 7121) at a weight ratio of (A)/(B) of 90/10 to 60/40, wherein a multiplicity of domains comprising component (B) mainly in the configuration of lamellar or rod-shaped pieces are present in a continuous phase comprising component (A) substantially in parallel to the external surface of the film or sheet and the thickness (D) of the lamellar or rod-shaped pieces is less than 150 nm per piece.
> 2) The biodegradable resin drawn film or biodegradable resin drawn sheet according to item 1) above, wherein the component (A) and/or (B) is a biodegradable polyester.
> 3) The biodegradable resin drawn film or biodegradable resin drawn sheet according to item 1) above, wherein component (A) is a polylactic acid polymer derived mainly from L-lactic acid and/or D-lactic acid.
> 4) The biodegradable resin drawn film or biodegradable resin drawn sheet according to the item 1) above, wherein a weight ratio of (A)/(B) is 90/10 to 75/25.
> 5) The biodegradable resin drawn film or biodegradable resin drawn sheet according to item 3) above, wherein the component (A) comprises a composition prepared by mixing (A1) a crystalline polylactic acid having an optical purity OP (A1) and (A2) an amorphous polylactic acid having an optical purity OP (A2) and satisfying the following equations (1) and (2):

$$(1) \quad 80\ \% \leq OP\,(A1) \leq 100\ \%, \quad 0\ \% \leq OP\,(A2) < 80\ \%$$

$$(2) \quad 20\ \% \leq [A2]\,/\,([A1] + [A2]) \leq 100\ \%$$

wherein [A1] + [A2] = 100 %, [A1] represents a weight ratio (unit: %) of the crystalline polylactic acid (A1), and [A2] represents a weight ratio (unit: %) of the amorphous polylactic acid (A2).

6) The biodegradable resin drawn film or biodegradable resin drawn sheet according to item 2) above, wherein the component (B) is at least one polycondensed aliphatic polyester derived mainly from aliphatic dicarboxylic acid and aliphatic diol or at least one polycondensed aliphatic aromatic polyester derived from an aromatic dicarboxylic acid, an aliphatic dicarboxylic acid and an aliphatic dioL

7. The biodegradable resin drawn film or biodegradable resin drawn sheet according to item 6, wherein the polycondensed aliphatic polyester or the polycondensed aliphatic aromatic polyester is selected from the group consisting of polyethylene adipate, polypropylene adipate, polybutylene adipate, polyhexene adipate, polyethylene succinate, polypropylene succinate, polybutylene succinate, polybutylene succinate adipate, polyethylene terephthalate succinate and polybutylene adipate terephthalate.

8) The biodegradable resin drawn film or biodegradable resin drawn sheet according to any one of items 1) to 7) above, which has a haze value measured using a hazemeter (ASTM-D 1003-95) of less than 5 %.

9) A composite film or composite sheet comprising at least one layer which is a biodegradable resin drawn film or biodegradable resin drawn sheet according to any one of items 1) to 8) above

10) A process for producing a biodegradable resin drawn film or biodegradable resin drawn sheet which comprises the steps of melt extruding a mixture comprising two types of the biodegradable resins having glass transition temperatures Tg which differ by greater than or equal to 25°C according to the differential scanning calorimetry (JIS-K 7121), and drawing in at least one direction until the thickness of the ultimate film or sheet becomes greater than or equal to 1/200 times and less than or equal to 1/40 times the height of the die lip opening (in other words, until the area of the ultimate film or sheet becomes greater than or equal to 40 times and less than or equal to 200 times as large as the area of the film or sheet just extruded from the die lip).

11) The process for producing a biodegradable resin drawn turn or biodegradable resin drawn sheet according to item 10) above, wherein after the mixture comprising two types of the biodegradable resins is melt extruded from the die lip and drawn in the molten state in at least one direction until the thickness becomes greater than or equal to 1120 times and less than or equal to 1/2 times the height of the die lip opening (in other words, until the area becomes greater than or equal to 2 times and less than or equal to 20 times as large as the area of the film or sheet just extruded from the die lip), the film or sheet is quenched to make it substantially amorphous and then drawn in at least one direction.

12) The process for producing a biodegradable resin drawn film or biodegradable resin drawn sheet according to item 10) or 11) above, wherein the mixture of two types of biodegradable resins is a mixture comprised mainly of (A) a biodegradable resin having a glass transition temperature Tg of greater than or equal to 30°C according to the differential scanning calorimetry (JIS-K 7121) and (B) a biodegradable resin having a glass transition temperature of less than or equal to 5°C according to the differential scanning calorimetry (JIS-K 7121) and the weight ratio of (A)/(B) is 90/10 to 60/40.

## Brief Description of Drawing

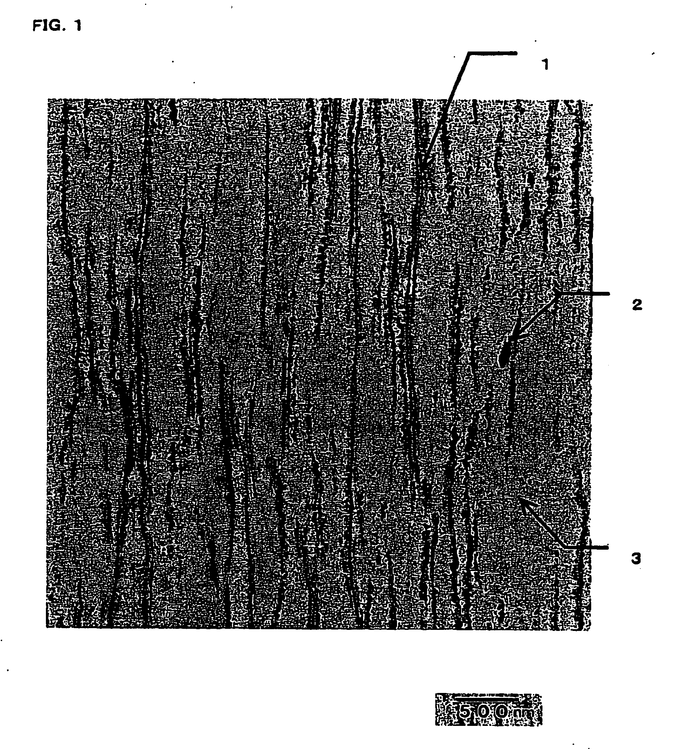

Fig. 1 is an example of electron microscope photographs (magnification of 40,000 times) of the cross section of a film cut in the thickness direction along with the longitudinal (MD) direction thereof, which film is Sample No. 2 of Example 1 made of a virgin raw material. In the figure, numeral 1 indicates a lamellar or rod-shaped piece, numeral 2 indicates a gel phase, and numeral 3 indicates a microphase.

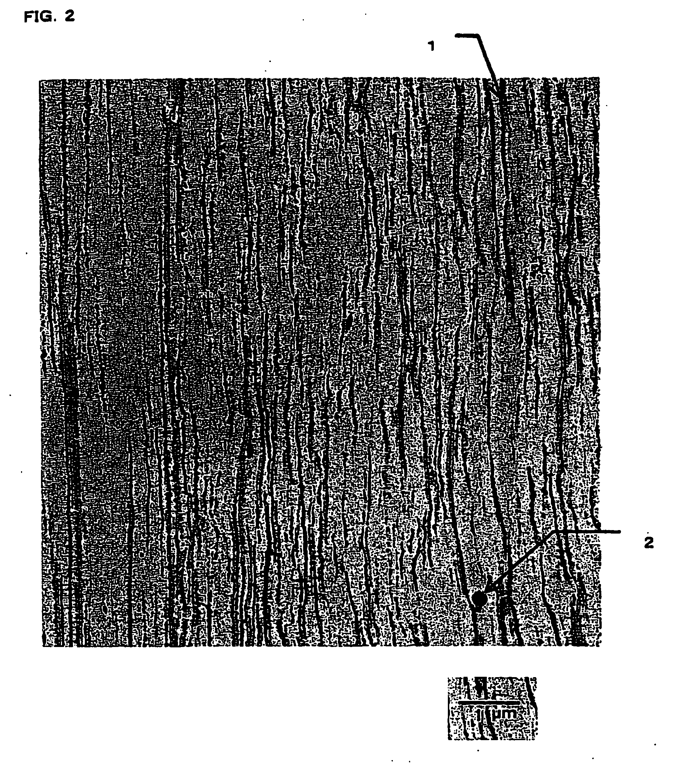

Fig. 2 is an example of electron microscope photographs (magnification of 20,000 times) of the cross section of a film cut in the thickness direction along with the longitudinal (MD) direction thereof, which film is Sample No. 2 of Example 1 made of a virgin raw material. In the figure, numeral 1 indicates a lamellar or rod-shaped piece, numeral 2 indicates a gel phase, and numeral 3 indicates a microphase.

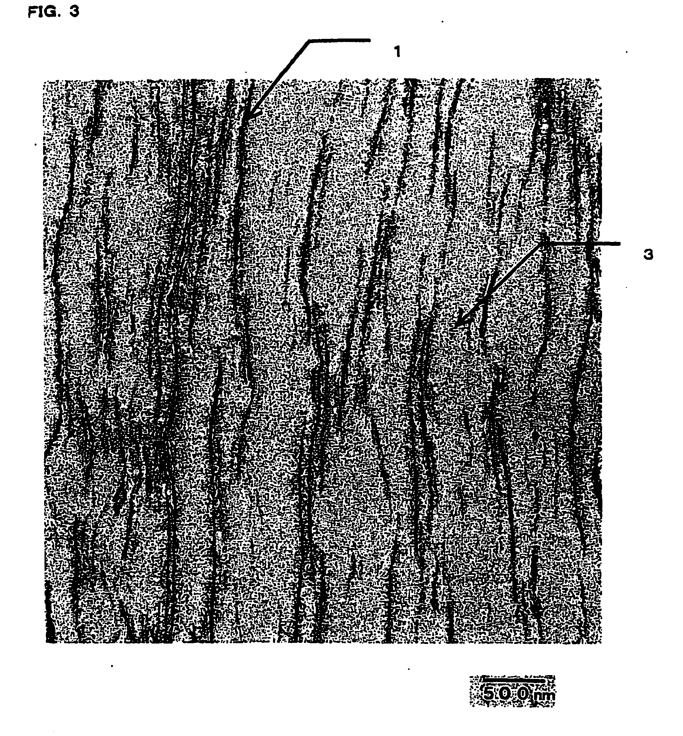

Fig. 3 is an example of electron microscope photographs (magnification of 40,000 times) of the cross section of a film cut in the thickness direction along with the width (TD) direction thereof, which film is Sample No. 2 of Example 1 made of a virgin raw material. In the figure, numeral 1 indicates a lamellar or rod-shaped piece, numeral 2 indicates a gel phase, and numeral 3 indicates a microphase.

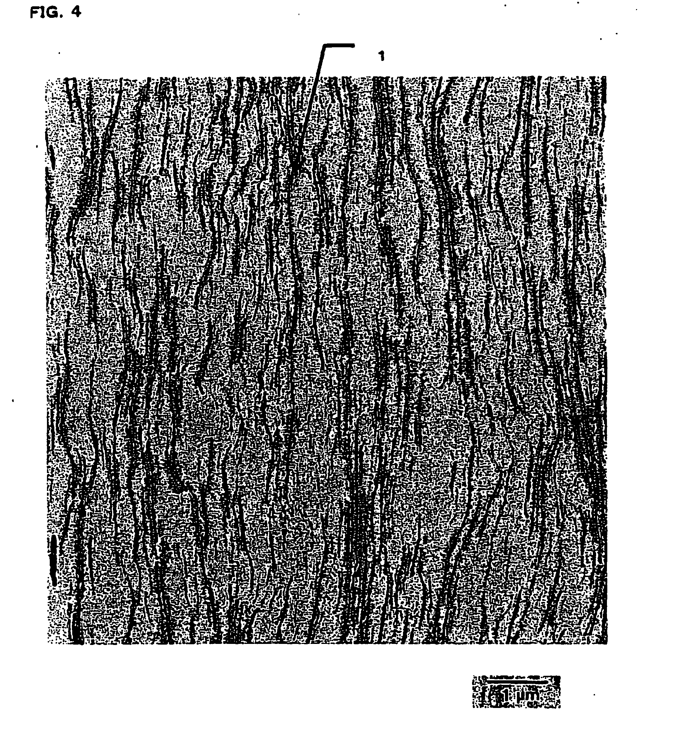

Fig. 4 is an example of electron microscope photographs (magnification of 20,000 times) of cross sections of a film cut in the thickness direction along with the width (TD) direction thereof, which film is Sample No. 2 of Example 1 made of a virgin raw material. In the figure, numeral 1 indicates a lamellar or rod-shaped piece, numeral 2 indicates a gel phase, and numeral 3 indicates a microphase.

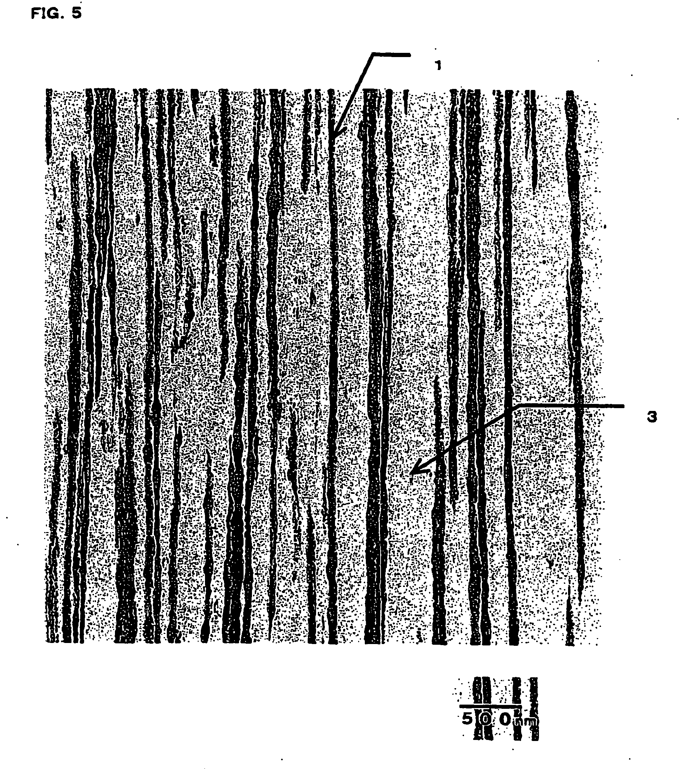

Fig. 5 is an example of electron microscope photographs (magnification of 40,000 times) of the cross section of a film cut in the thickness direction along with the longitudinal (MD) direction thereof, which film is Sample No. 2 of Example 2 made of a virgin raw material. In the figure, numeral 1 indicates a lamellar or rod-shaped piece, numeral 2 indicates a gel phase, and numeral 3 indicates a microphase.

**Best Mode for Carrying Out the Invention**

The biodegradable resin drawn film or sheet of the present invention is a drawn film or sheet that is composed of a biodegradable resin and can be ultimately decomposed by microorganisms.

The biodegradable resin of the present invention comprises microbiological products such as polyhydroxybutylate and other polyhydroxyalkanoates; chemically synthesized products such as aliphatic polyesters, aliphatic aromatic polyesters and polyvinyl alcohols; natural products such as esterified starch, cellulose acetate, chitosan and a blend comprising starch and chemically synthesized biodegradable resin.

The biodegradable resin (A) of the present invention has a glass transition temperature Tg of greater than or equal to 30°C according to the differential scanning calorimetry (JIS-K 7121), for example, polylactic acid, modified polyethylene terephthalate, polyglycol acid, polyvinyl alcohol, cellulose acetate.

Among the above biodegradable resins, the polylactic acid resin is a resin composition comprising at least one selected from the group consisting of a homopolymer of L-lactic acid unit or D-lactic acid unit, a copolymer of L-lactic acid unit and D-lactic acid unit, and a copolymer containing L-lactic acid unit and/or D-lactic acid unit and DL-lactic acid unit as main component (80 to 100 % by weight) and other monomers selected from the group consisting of the group of hydroxycarboxylic acids, lactones, dicarboxylic acids and polyvalent alcohols.

The hydroxycarboxylic acid monomers include glycol acid, 3-hydroxybutyric acid, 4-hydroxybutyric acid, 3-hydroxyvaleric acid, 4-hydroxyvaleric acid, 6-hydroxycaproic acid The lactones include glycolide, lactide, β-propiolactone, γ-butyrolactone, δ-valerolactone, ε-caprolactone, lactones wherein various groups such as a methyl group are substituted. The dicarboxylic acids include succinic acid, glutaric acid, adipic acid, suberic acid, azelaic acid, sebacic acid, terephthalic acid, isophthalic acid, and the like. The polyvalent alcohols include aromatic polyvalent alcohols such as reaction products produced by reacting bisphenol and ethylene oxide; aliphatic polyvalent alcohols such as ethylene glycol, propylene glycol, butane diol, hexane diol, octane diol, glycerine, sorbitane, trimethylol propane, and neopentyl glycol; ether glycol such as diethylene glycol, triethylene glycol, polyethylene glycol and polypropylene glycol.

In view of transparency, the polylactic acid polymer preferably includes a composition comprising compatible components having similar SP values (solubility coefficient), a square root of cohesive energy density (CED) of molecules, which can be an indication for the force applied between molecules, and having a molecular structure wherein a fine crystalline portion having high optical purity and a rough amorphous portion having low optical purity form a sea-island structure; more preferably, a composition comprising a mixed resin composed of high crystalline polylactic acid (A1) having high optical purity of 100 to 80 % and low crystalline polylactic acid (A2) having low optical purity of 80 to 0 % (mixing ratio of A1/A2 = 0/100 to 100/0); and even more preferably a composition wherein the content of low crystalline polylactic acid (A2) is greater than or equal to 20 % of the polylactic acid polymer from the viewpoint of transparency.

The polylactic acid polymer can be polymerized according to known processes such as condensation polymerization (solution method disclosed in JP-A-7-2987 ring-opening polymerization (lactide method disclosed in JP-A-9-31171. The crystallinity and melting point can be freely controlled by changing the ratio of monomers derived from L-lactic acid and D-lactic acid (L/D ratio). For example, according to the condensation polymerization (solution method), polylactic acid of an arbitrary composition can be obtained by direct dehydration condensation of L- or D-lactic acid or a mixture thereof. According to the ring-opening polymerization (lactide method), polylactic acid can be obtained by ring-opening polymerization of lactide, which is a cyclic dimer of polylactic acid, using a selected catalyst and a polymerization adjustor, if necessary. Further, there can be employed a polymerization method wherein a molecular weight is increased using a binder such as polyisocyanate, a polyepoxy compound, acid anhydride and polyfunctional acid chloride. The weight average molecular weight of the polylactic acid resin is preferably 50,000 to 1,000,000, more preferably 100,000 to 500,000. When the molecular weight is less than 50,000, sufficient practical physical properties such as mechanical strength and heat resistance are not achieved. A polylactic acid polymer with a molecular weight of more than 1,000,000 is disadvantageously inferior in molding processability.

The biodegradable resin (B) of the present invention has a glass transition temperature Tg of less than or equal to 5°C according to differential scanning calorimetory (JIS-K7121), for example, an aliphatic polyester including an aliphatic aromatic polyester containing aromatic components in the range where biodegradability is not deteriorated, a polyester carbonate and the like. Specifically, the biodegradable resin (B) is at least one biodegradable resin selected from: a polycondensed aliphatic polyester derived mainly from an aliphatic dicarboxylic acid and an aliphatic diol (50 to 100 % by weight); an aliphatic polyester prepared by ring-opening polymerization of cyclic lactones; a synthetic aliphatic polyester; an aliphatic polyester biosynthesized in microorganisms; an aliphatic aromatic polyester; an aliphatic polyester carbonate and the like, which resin has a glass transition temperature Tg of less than or equal to 5°C, preferably less than or equal to 0°C, more preferably less than or equal to -20°C and exhibits substantially no compatibility with the biodegradable resin (A). When the Tg of the biodegradable resin (B) exceeds 5°C, the impact resistance is not often improved.

The polycondensed aliphatic polyester derived mainly from an aliphatic dicarboxylic acid and an aliphatic diol includes condensates derived from at least one selected from each of aliphatic carboxylic acids such as succinic acid, glutaric acid, adipic acid, suberic acid, azelaic acid, sebacic acid and dodecandionic acid and aliphatic diols such as ethylene glycol, 1,3-propione glycol, 1,4-butane diol and 1,4-cyclohexane dimethanol. The aliphatic polyester prepared by ring-opening polymerization of cyclic lactones includes at least one ring-opening polymer selected from cyclic monomers such as ε-capurolactone, δ-valerolactone, β-methyl-δ-valerolactone. The synthetic aliphatic polyester includes a copolymer of succinic acid anhydride and ethylene oxide and a copolymer of cyclic acid anhydride such as propylene oxide and oxirane. The aliphatic aromatic polyester includes at least one polycondensate derived from an aromatic dicarboxylic acid such as isophthalic acid and terephthalic acid; an aliphatic dicarboxylic acid such as succinic acid, glutaric acid and adipic acid; and an aliphatic diol such as ethylene glycol, 1,3-propione glycol, 1,4-butane diol and 1,4-cyclohexane dimethanol. The aliphatic polyester biosynthesized in microorganisms includes poly(hydroxyalkanoic acids), specifically poly(3-hydroxybutyric acid), poly(3-hydroxypropionic acid), poly(3-hydroxyvaleric acid), a poly(3-hydroxybutyric acid-3-hydroxyvaleric acid) copolymer, poly(3-hydroxybutyric acid-3-hydroxyhexanoic acid) copolymer, poly(3-hydroxybutyric acid-3-hydroxypropionic acid) copolymer, poly(3-hydroxybutyric acid-4-hydroxybutyric acid) copolymer, poly(3-hydroxybutyric acid-3-hydroxyoctanoic acid) copolymer and poly(3-hydroxybutyric acid-3-hydroxydecanoic acid) copolymer. The aliphatic polyester carbonate includes poly(butylene succinate/carbonate), poly(ethylene succinate/carbonate), poly(propylene succinate/carbonate), poly(ethylene adipate/carbonate), poly(propylene adipate/carbonate) and poly(butylene adipate/carbonate)

Particularly preferred as the biodegradable resin (B) of the present invention having a glass transition temperature Tg of less than or equal to 5°C is a polycondensed aliphatic polyester derived mainly from an aliphatic dicarboxylic acid and an aliphatic diol and a polycondensed aliphatic aromatic polyester derived from an aliphatic dicarboxylic acid, an aromatic dicarboxylic acid and an aliphatic diol, both of which are considered to have relatively good transparency among the components listed above. Specific examples thereof include polyethylene adipate, polypropylene adipate, polybutylene adipate, polyhexene adipate, polyethyelne succinate, polypropylene succinate, polybutylene succinate, polybutylene succinate adipate, polyethylene terephthalate succinate, polybutylene adipate terephthalate.

As the polymerization method of aliphatic polyester, known processes such as direct processes and indirect processes can be employed. The direct process comprises conducting polycondensation by selecting an anhydride acid or derivative of the above-exemplified dicarboxylic compounds as an aliphatic dicarboxylic acid component and the above-exemplified diol compounds or derivative thereof as an aliphatic diol compound, and produces an aliphatic polyester having a high molecular weight by removing water generated during the polycondensation. In the indirect process, an aliphatic polyester having a high molecular weight can be produced by adding a small amount of chain extension agent, for example, a diisocyanate compound such as hexamethylene diisocyanate, isophorone diisocyanate, xylylene diisocyanate and diphenylmethane diisocyanate to the oligomer polycondensed in the direct process. The weight average molecular weight of the aliphatic polyester is preferably in the range of 20,000 to 500,000, more preferably 150,000 to 250,000. An aliphatic polyester having a molecular weight of less than 20,000 does not exhibit sufficient practical physical properties such as mechanical strength, and that having a molecular weight of more than 500,000 is inferior in molding processability.

The weight ratio (100 % in total) of the biodegradable resin (A) of the present invention with a glass transition temperature Tg of greater than or equal to 30°C and the biodegradable resin (B) of the present invention with a glass transition temperature Tg of less than or equal to 5°C contained in the mixture (A)/(B), is 90/10 to 60/40. When the weight ratio of the biodegradable resin (B) is under 10 %, impact resistance is not sufficiently improved. When it is over 40 %, film forming capability is sometimes deteriorated because of reduction in melt tensile strength and die swelling and also lamellar pieces of the biodegradable resin (B) are thickened thus deteriorating transparency. A preferred range of the weight ratio of (A)/(B) is 90/10 to 75/25.

As the biodegradable resin (A) of the present invention, in addition to the above virgin raw materials, a recycled raw material such as trim scrap generated upon the resin film forming can be used alone or in combination with the virgin raw materials.

Further, mixing morphology of the biodegradable resins (A) and (B) in the biodegradable resin drawn film or sheet of the present invention is such that domains comprising resin (B) mainly in the configuration of lamellar or rod-shaped piece, are dispersed in the continuous phase comprising resin (A). For example, the domains of the phase (B) excluding large spherical (oval) gel phases and spherical (oval) fine phases having a size of smaller than 5 nm, which account for less than 10 % and less than 40 % thereof, respectively, i.e., the main domains in the configuration of the lamellar or rod-shaped pieces accounting for greater than or equal to 50 % of the total domains of the phase (B), are dispersed almost in parallel to the external surfaces (top and back side planes) of a film or sheet. Because the main configuration of the phase (B) domains in the phase (A) is not spherical (oval) but is lamellar or rod-shaped, the width (thickness) of the phase (A), which is inferior in impact resistance and which is sandwiched with the phases (B), is relatively small in relation to the thickness of the film or sheet. Further, the impact absorbing area of the phase (B) having high impact resistance to the impact applied from the direction perpendicular to the external surfaces (top and back side planes) of a film or sheet increases to achieve high impact resistance.

In addition, the lamellar or rod-shaped pieces which form part of the biodegradable resin (B) in the film or sheet of the present invention each have the thickness (D) of less than 150 nm (e.g., greater than or equal to 5 nm and less than 150 nm) and are separated into microphases which are dispersed and are almost in parallel to the surface of the film. When the thickness (D) of the lamellar or rod-shaped pieces is greater than or equal to 150 nm, the transparency of the film is disadvantageously deteriorated because, for example, the crystal size of aliphatic polyester, which is a factor in the inhibition of light transmission, becomes larger than light wavelength (about 400 to 800 nm). Therefore, the thickness of the pieces is preferably less than or equal to 125 nm (e.g., greater than or equal to 5 nm and less than or equal to 125 nm), more preferably less than or equal to 100 nm (e.g., greater than or equal to 5 nm and less than or equal to 100 nm), further more preferably less than or equal to 75 nm (e.g., greater than or equal to 5 nm and less than or equal to 75 nm). When the length (L), which is in the direction perpendicular to the thickness of the lamellar or rod-shaped pieces which form part of the biodegradable resin (B) of the film or sheet of the present invention, is similar to the thickness of the lamellar or rod-shaped pieces, the resultant film or sheet lacks the impact absorbing areas which form part of the phase (B) and which exhibit high impact resistance to impact applied in the direction perpendicular to the external surfaces (top and back side planes), so that the impact resistance of the film or sheet disadvantageously deteriorates. The length (L) and distance (l) of the lamellar or rod-shaped pieces which form part of the biodegradable resin (B) in the film or sheet of the present invention are not particularly limited. Preferred are the length (L) of greater than or equal to 1 $\mu$m (e.g., greater than or equal to 1 $\mu$m and less than or equal to 15 $\mu$m) and the distance (1) of greater than or equal to 5 nm (e.g., greater than or equal to 5 nm and less than or equal to 15 $\mu$m). More preferred are the length (L) of greater than or equal to 5 $\mu$m (e.g., greater than or equal to 5 $\mu$m and less than or equal to 15 $\mu$m) and the distance (l) of greater than or equal to 25 nm (e.g., greater than or equal to 25 nm to less than or equal to 15 $\mu$m).

In general, a stable configuration of domains formed by phase separation in a resin mixture (polymer blend) comprised of polymers substantially insoluble in each other has been considered: the polymers are separated into macrophases with a size of several $\mu$m to several tens $\mu$m and have a wide size distribution and the shape and disposition thereof are irregular and random ("Polymer Blend" written by Saburo Akiyama, et al, edited by CMC Publishing Co, Ltd.; page 173). Specifically, the above configuration means that even if polymers in the molten state are mechanically well kneaded with a co-rotating biaxial extruder or the like to achieve substantially the state where the polymers are separated into microphases at the discharge port of the extruder, macrophase separation stable in the dispersed state occurs while the polymers are transferred from an extruder to a die lip such as a T-die or a circular die using a circular tube or the like and discharged and extrusion molded into the shape of a film/sheet or a ring; and that, even in the case of a resin composition comprising polymers in the state similar to microphase separation wherein melt viscosities are in a specific relation, a macrophase separation stable in the dispersed state occurs when the resin composition is used as a recycled raw material to be recovered and processed using an extruder several times since the viscosity of the recycled raw material deviates from a specific range.

However, the present inventors have found that the phase separation state of the biodegradable resin (B) with a glass transition temperature Tg of less than or equal to 5°C, which is dispersed in the biodegradable resin (A) with a glass transition temperature Tg of greater than or equal to 30°C, in the biodegradable resin drawn film or sheet of the present invention can be separated into microphases having a domain size of several nm to several hundred nm in the direction of the thickness of a film or sheet by adjusting the drawing ratio (area magnification) based on the die lip opening to a specific range even if the resin (B) forms macrophases at the discharge port of a die lip; and further they have found that the microphase separation of the phase (B) improves the impact resistance without deteriorating the transparency of the biodegradable film or sheet in the state of microphase separation.

The state of the phase separation of the biodegradable resin (B) with a glass transition temperature Tg of less than or equal to 5°C dispersed in the biodegradable resin (A) with a glass transition temperature Tg of greater than or equal to 30°C in the biodegradable resin drawn film or sheet of the present invention is more influenced by molding and processing conditions than by the compatibility and melt viscosities of the resins. Therefore, the molding and processing conditions are very important to achieve good performance of a biodegradable resin drawn film or sheet. According to a simple screening process using a commercially available apparatus (e.g., transmission electron microscope) as described below, a composition of the resins and drawing ratio and/or heat treatment processing conditions can be appropriately selected so that the size of the lamellar or rod-shaped pieces of the phase (B) in the phase (A) falls within the ranges specified above.

The present invention most greatly differs from prior art in that a biodegradable resin drawn film or sheet comprising the biodegradable resin (A) with a glass transition temperature Tg of greater than or equal to 30˚C and the biodegradable resin (B) with a glass transition temperature of less than or equal to 5˚C, which is dispersed in the biodegradable resin (A) in the form of lamellar or rod-shaped pieces, has improved impact resistance without deterioration of transparency, and also has film re-forming capability (recyclability) that maintains impact resistance, which deteriorates according to reduction of a molecular weight which occurs when trim scrap generated upon film forming is pelletized by extrusion for use as a recycled raw material, and transparency, which deteriorates according to increase of a phase separation domain size as the difference between melt viscosities increases, at the level where no trouble occurs in practical use of the film or sheet.

Herein, good transparency indicates, for example, a haze value measured using a hazemeter (ASTM-D 1003-95) of less than 5 %, which corresponds to a level required for a wrapping film in practice, that is, the level where the appearance (outline) of an article wrapped with a wrapping film or sheet is clear when the article is seen through the film or sheet. The haze value is preferably less than 4 %, the translucent level where an article can be seen without clouding, more preferably less than 3 %, the level where even the outline of small characters printed on an article can be clearly seen. The improvement of impact resistance means that dart impact strength according to ASTM-D 1709-91 (Method A) is improved to more than twice as high as that of a film or sheet made solely of the biodegradable resin (A) with a glass transition temperature Tg of greater than or equal to 30˚C. Further, the good film re-forming capability (recyclability) means that a film prepared by using a recycled raw material exhibits the good transparency and the improved impact resistance as described above, which recycled raw material is obtained by first forming a film or sheet by melt extruding and drawing the mixture of the biodegradable resins (A) and (B) followed by pulverizing to obtain a raw material, and then repeating three times the steps of drying, melt extruding and drawing the raw material to form a film or sheet followed by pulverization.

Next, a process for producing the biodegradable resin drawn film or sheet of the present invention is illustrated.

The process and apparatus for mixing the biodegradable resin (A) with a glass transition temperature Tg of greater than or equal to 30˚C and the biodegradable resin (B) with a glass transition temperature Tg of less than or equal to 5˚C are not particularly limited. The method wherein the both resins are fed in a uniaxial or biaxial extrusion kneader, melt kneaded and extruded from a die lip to form a film or sheet directly or to form strands to obtain pellets which are extruded again to produce a film or sheet is an example. As a temperature for melt extrusion, the melting point of the biodegradable resin (A) with a glass transition temperature Tg of greater than or equal to 30˚C is optionally selected considering a mixing ratio, any preferable range of the temperature is usually from 100 to 250˚C.

A film or sheet is obtained by drawing and/or heat treatment according to conventional drawing methods such as inflation method or tenter method, wherein uniaxial drawing or simultaneous or subsequent biaxial drawing is conducted. Specifically, a film or sheet is obtained by (1) a melt drawing method wherein a resin extruded in the form of a tube or sheet is drawn in the molten state according to the inflation method or cast method to obtain a non-shrinkable film or sheet, or (2) a cold drawing method wherein a resin extruded in the form of a tube or sheet is quenched from the molten state to solidify in the state close to the amorphous state, heated to a temperature between the glass transition temperature and the melting point and subjected to drawing according to the inflation method or the roll tenter method, and optionally subjected to heat treatment while being held for restraining shrinkability of a film or sheet, to obtain a shrinkable or non-shrinkable film or sheet.

The melt drawing method herein indicates a production process wherein both of the biodegradable resin (A) with a glass transition temperature Tg of greater than or equal to 30˚C and the biodegradable resin (B) with a glass transition temperature Tg of less than or equal to 5˚C are drawn in the molten state (in the completely amorphous state) at a temperature not lower than the melting point of the resin (A). The film or sheet obtained thereby exhibits low impact strength because of low drawing orientation. The cold drawing method is a production process wherein the mixture of the resins (A) and (B) in the molten state is quenched down to the glass transition temperature Tg of the resin (A) or below to make the resin (A) amorphous and then heated to a temperature of the glass transition temperature or higher and the melting point or below of the resin (A) followed by drawing. The film or sheet obtained thereby exhibits high impact strength because of high drawing orientation.

Regardless of a drawing method, a film or sheet is drawn in at least one direction until the thickness of the ultimate drawn film or sheet becomes greater than or equal to 1/200 times and less than or equal to 1/40 times the height of the die lip opening, that is, until the area of the ultimate drawn film or sheet is 40 to 200 times as large as that of a film or sheet just after extrusion from the die lip. (Hereinafter, the area ratio of the film or sheet just after extruded from the die lip / the ultimate drawn film or sheet is called "an area ratio based on the die lip opening".)

At an area ratio based on the die lip opening of less than 40 times, the thickness (D) of lamellar or rod-shaped pieces of the biodegradable resin (B) with a glass transition temperature Tg of less than or equal to 5˚C dispersed in the biodegradable resin (A) with a glass transition temperature Tg of greater than or equal to 30˚C becomes greater than or equal to 150 nm so that the transparency or impact resistance tend to be deteriorated. While, at an area ratio based on the die lip opening of more than 200, the drawing stability is considerably lowered so that film production cannot be conducted stably.

Particularly, when a substance obtained by quenching a molten resin followed by solidification in the state close to the amorphous state (herein called "parison") is subjected to cold drawing after being heated again in the cold drawing method and the biodegradable resin (A) with a glass transition temperature Tg of greater than or equal to 30˚C in the molten state is melt drawn in at least one direction at the area ratio of 2 to 20 so that the thickness of parison falls in the range of 1/2 to 1/20 times as large as the opening of an extrusion die lip opening, and cold drawn in MD direction (extrusion direction or longitudinal direction) and TD direction (direction perpendicular to MD direction or width direction) to be 1.5 to 6 times, respectively, and then at least uniaxially drawn to fall in the range of 40 to 200 times at an area ratio based on the die lip opening until the thickness of the drawn film or sheet is ultimately 1/200 to 1/40 times as large as the opening of the die lip.

A preferred range of melt drawing ratio upon preparation of parison is that the thickness of parison becomes 1/18 to 1/3 times the height of die lip opening, i.e., 3 to 18 times at an area ratio based on a die lip opening, in view of transparency and drawing stability. Further, when a film or sheet is formed from parison by cold drawing, the range of the cold drawing ratio is 1.5 to 6 times, preferably 2 to 5 times, the parison size in both MD and TD directions from the viewpoint of drawing stability and machine adaptability such as rigidity.

A larger drawing ratio is preferable in view of the strength and thickness accuracy of the resultant film or sheet. However, in the case of cold drawing where a cold drawing ratio in both MD and TD directions is over 6 times, drawing stability is considerably lowered and stable film production sometimes cannot be conducted.

Further, heat treatment of the film or sheet of the present invention is conducted at a temperature of about 100 to 160˚C for at least 0.5 to 10 seconds when a non-shrinkable film or sheet is obtained. When the heat treatment temperature and period fall below the prescribed range, heat shrinkage degree of the resultant film becomes high so that non-shrinkability cannot be achieved. When the heat treatment temperature and period exceed the prescribed range, a film may melt and tear during the heat treatment.

The thickness of the drawn film or sheet of the present invention is preferably 5 to 500 $\mu$m, more preferably 7 to 250 $\mu$m, further preferably 10 to 100 $\mu$m, but not limited thereto.

In the biodegradable resin drawn film or sheet of the present invention, additives commonly used in this technical field can be added, if desired, in the range where the requirement and effects of the present invention are not deteriorated. Such additives includes a plasticizer, a filler, an antioxidant, a thermal stabilizer, a ultraviolet ray absorber, a lubricant, an antistatic agent, a flame retardant, a nucleating agent, cross-linking agent, a colorant, and the like. The plasticizer can be selected from those commonly used in this field and preferred are those which do not bleed out even if they are added to a resin composition in an amount of greater than or equal to 10 % by weight, for example, aliphatic polyvalent carboxylic esters, fatty polyvalent alcohol esters, oxoic esters, epoxy plasticizers, and the like. Specific examples thereof include triacetine (TA), tributyrine (TB), butylphthal butylgrycolate (BPBG), acetyl tributyl citrate (ATBC), dioctyl sebacate (DBS), triethylene glycol diacetate, glycerin esters, butyl oleate (BO), ether and ester adipate, epoxy soyabean oil (ESO), and the like.

Fillers are generally added for the purpose of improving various properties such as strength and durability in the synthetic resin field. There are two types of fillers, i.e., inorganic and organic fillers, and they are optionally selected depending on the film desired. The inorganic fillers include an oxide of metals such as magnesium, calcium, barium, zinc, zilconium, molybdenum, silicon, antimony and titanium, and hydrate (hydroxide) thereof; a compound such as sulfate, carbonate and silicate, and double salt thereof; and a mixture thereof. Specific examples include aluminum oxide (almina) and a hydrate thereof, calcium hydroxide, magnesium oxide (magnesia), magnesium hydroxide, zinc oxide (zinc white), oxides of lead such as red lead and white lead, magnesium carbonate, calcium carbonate, basic magnesium carbonate, white carbon, mica, talc, glass fiber, glass powder, glass beads, clay, diatom earth, silica, Wollastonite, iron oxide, antimony oxide, titanium oxide (titania), lithopone, pumice powder, aluminum sulfate (gypsum, etc.), zilconium silicate, barium carbonate, dolomite, molybdenum disulfide, iron sand and the like. The organic fillers includes cellulose type and starch type (including plasticized starch) fillers and the like. Antioxidants include a hindered phenol type antioxidant such as p-t-butylhydroxytoluene and p-t-butylhydroxyanisole. Thermal stabilizers include triphenyl phosphite, trilauryl phosphite, trisnolylphenyl phosphite, and the like. Ultraviolet absorbers include p-t-butylphenylsalicylate, 2-hydroxy-4-methoxybenzophenone, 2-hydroxy-4-methoxy-2'-carboxybenzophenone, 2,4,5-trihydroxybutylophenone, and the like. Lubricants include calcium stearate, zinc stearate, barium stearate, sodium palmitate, amide stearate, amide erucate, and the like. Antistatic agents include N,N-bis(hydroxyethyl)alkylamine, alkylamine, alkylallylsulfonate, alkylsulfonate, and the like. Flame retardants include hexabromocyclododecane, tris-(2,3-dichloropropyl)phosphate, pentabromophenyl allylether and the like. Nucleating agents include polyethylene terephthalate, poly-transcyclohexane dimethanol terephthalate, amide palmitate and the like.

The biodegradable resin drawn film or sheet of the present invention may be made either of a single material or of a composite material formed by laminating the single material with the same or different material. Although the film or sheet is more hydrophilic than polyolefin resin products, the surface thereof can be subjected to corona treatment or the like to impart further hydrophilicity to the film or sheet for printing, coating or laminating. The surface tension upon corona treatment is preferably 40 to 60 dyn/cm.

Hereinafter, measurement process and examples are illustrated in detail.

In the Examples and Comparative Examples, the polylactic acid polymers (A1) and (A2) shown in Table 1 as the biodegradable resin (A) with a glass transition temperature Tg of greater than or equal to 30˚C and the aliphatic polyesters (B1), (B2) and (B3) shown in Table 1 as the biodegradable resin (B) with a glass transition temperature Tg of less than or equal to 5˚C were employed. The composition of the biodegradable resin used and the resultant drawn film or sheet was measured according to the following procedures.

(1) Optical purity OP of polylactic acid polymers (A1) and (A2)

The optical purity (OP; unit: %) of the polylactic acid polymer which is a resin composed mainly of the polylactic acid resin can be calculated from the following equation based on the composition ratio of L-lactic acid and/or D-lactic acid monomer units in the polymer as described above.

$$OP = |\,[L] - [D]\,|$$

wherein [L] + [D] = 100.

The composition ratio of L-lactic acid and/or D-lactic acid monomer units composing polylactic acid was determined by:

preparing a hydrolyzed sample (liquid) by alkaline decomposition of a sample with 1N-NaOH, followed by neutralizing with 1N-NCl and adjusting the concentration with distilled water;

passing the hydrolyzed sample through a high performance liquid chromatography (HPLC: LC-10A-VP) manufactured by Shimadzu Corp. to obtain an area ratio of detected peaks (area was measured by a vertical line method) corresponding to L-lactic acid and D-lactic acid at 254 nm UV;

obtaining a weight ratio of L-lactic acid [L] (unit: %) in the polylactic acid polymers (A1) and (A2) and a weight ratio of D-lactic acid [D] (unit: %) in the polylactic acid polymers (A1) and (A2) from the area ratio; and

taking the mean (rounded) of three measurement values per polymer as the measurement value of the composition ratio.

Column: TSKgel-Enantio-L1 (4.6 mm across× 25 cm long) manufactured by Tosoh Corp.

Mobile phase: 1mM-CuSO4 solution

Concentration of sample solution: 25 pg/$\mu$L (concentration as a polylactic acid polymer)

Amount of sample liquid charged: 10 $\mu$L

Flow rate of solvent: 0.5 to 0.8 ml/min

Column temperature: 40˚C

(2) Weight average molecular weight (Mw) of polylactic acid polymers (A1) and (A2) and biodegradable aliphatic polyesters (B1), (B2) and (B3)

The weight average molecular weight Mw was determined by using gel permeation chromatography (GPC: data processing part; GPC-8020, detector; RI-8020) manufactured by Tosoh Corp. under the following measuring conditions, as dispersed weight average values of polymers except for those having a molecular weight of less than or equal to 500 in terms of polystyrene value based on the standard polystyrene. Three measurement values per polymer were arithmetically averaged (with a number of significant figures of 2) and the average was employed as the measurement value.

Column: connected column of Shodex K-805 and K-801 from Showa Denko K.K. (7.8 mm across $\times$ 60 cm long)

Elute: chloroform

Concentration of sample solution: 0.2 wt/vol%

Amount of sample liquid charged: 200 $\mu$L

Flow rate of solvent: 1 ml/min

Column/detector temperature: 40˚C

(3) Glass transition temperature Tg, and melting point Tm of polylactic acid polymers (A1) and (A2) and biodegradable aliphatic polyesters (B1), (B2) and (B3)

According to JIS-K 7121, the melting point Tm and glass transition temperature Tg of a resin were measured. That is, about 10 mg of test sample was cut out from a sample film conditioned (by leaving to stand at 23˚C for 1 week) in the standard state (23˚C, 65 % RH) at two points each from the longitudinal direction and the width direction. Then, the test sample was heated from the room temperature (23˚C) to 200˚C at 10˚C/min at a nitrogen gas flow rate of 25 ml/min using differential scanning calorimeter (heat flow type DSC) DSC-7 type manufactured by Perkin-Elmer Co., Ltd. (primary heating) and kept at 200˚C for 10 minutes to melt completely. After that, the molten test sample was cooled down to -100˚C at 30˚C/min, kept at -100˚C for 2 minutes and then heated again (secondary heating) under the same conditions as the primary heating. Among the DSC curves drawn in the temperature increasing process, a top of melting (endothermic) peak of the primary heating was determined as melting point Tm (˚C) and a cross point (midpoint glass transition temperature) of step-wise changing part of a curve of the secondary heating and a line with equal distance in vertical axis direction from extended lines of both base lines was determined as glass transition temperature Tg (unit: ˚C). Four measurement values per polymer were arithmetically averaged (rounded to unit) and the average was employed as the measurement value.

(4) Measurement of thickness (D) of lamellar or rod-shaped piece of biodegradable aliphatic polyesters (B1), (B2) and (B3) in the resultant drawn film

Test pieces of 30 $\mu$m thick $\times$ 10 mm square were cut out from a polylactic acid resin drawn film or sheet, which was conditioned (by leaving to stand at 23˚C for 1 week) in the standard state (23˚C, 65 % RH), at three points with even intervals in the TD direction of the film or sheet. The test pieces were double dyed with osmium tetroxide and ruthenium tetroxide, and embedded in an epoxy resin. Then, using a ultra-microtome LKB 2088, the epoxy resin containing the test piece was sliced in the direction perpendicular to the plane of the embedded test piece (i.e., in the thickness direction of the test piece) along with the both MD and TD directions thereof to obtain ultra-thin pieces being 0.1 to 1 $\mu$m thick as samples for mirror inspection. Using a transmission electron microscope (TEM) H7100 type manufactured by Hitachi, Ltd., cross sections cut in the thickness direction along with the MD and TD directions of each sample were observed and photographed at a magnification of 40,000 times. First, three points were selected from each of the photographs, at which points domains of dyed biodegradable aliphatic polyester (B1), (B2) or (B3) excluding spherical (oval) gel pieces and spherical (oval) fine phases having a size of smaller than 5 nm, which account for less than 10 % and less than 40 % of the domains, respectively, i.e., the main configuration of the lamellar or rod-shaped pieces accounting for greater than or equal to 50 % of the phase (B) domains, were dispersed with an interval of greater than or equal to 5 nm in the thickness direction of the sample for mirror inspection (in the direction of the thickness of 0.1 to 1 $\mu$m of ultra-thin piece), had relatively clear dye interface and were not overlapped. Then, the dyed area width of the lamellar or rod-shaped piece in the thickness direction of the test piece (horizontal direction of the shorter side of the photographs) was measured. The measurement was conducted at 18 points per polylactic acid resin drawn film and the maximum width of the lamellar or rod-shaped piece was defined as the thickness (D) of a lamellar or rod-shaped piece. For the measurement, a 1 mm graduated scale was used and 1 mm was regarded as 25 nm. The portions where the lamellar or rod-shaped pieces were seemingly thick were known to be portions formed by aggregating thin lamellar or rod-shaped pieces when the lamellar or rod-shaped piece of the relevant portion was examined along with the vertical direction of the photograph (MD or TD direction of the test piece). The apparently thick portion was caused because lamellar or rod-shaped pieces having a size of smaller than 5 nm or spherical (oval) fine phases having a size of smaller than 5 nm intervene to make the dyed interfaces unclear. Since the lamellar or rod-shaped pieces were present in the state of microphase separation and dispersed, the thickness thereof was measured as described above.
Next, the evaluation method of performance of the polylactic resin drawn film or sheet is illustrated below:

<Transparency>

A square film test piece with a size of 50 mm $\times$ 50 mm and a thickness of 50 $\mu$m was cut out from a polylactic acid drawn film or sheet sample conditioned (by leaving to stand at 23˚C for 1 week) under the standard conditions (23˚C, 65 %RH). Haze (unit: %) was measured at the standard condition in accordance with ASTM-D 1003-95, using a hazemeter, model NDH-1001DP manufactured by Nippon Denshoku Industries Co., Ltd. Six measurement values per each type of film or sheet were arithmetically averaged (with a number of significant figures of 2) to obtain the haze value. The transparency was evaluated as described below in view of the visibility of an article to be wrapped when the film or sheet was used as a wrapping material.

Evaluation criterion:

| Evaluation Mark | Haze Value | Criterion |
|---|---|---|
| ⊙ | less than 3.0 | Excellent transparency; color and outline of characters of content are clear. |
| ○ | 3.0 or more and less than 4.0 | Good transparency; color and outline of characters of content are clear. |
| Δ | 4.0 or more and less than 5.0 | Sufficient enough for practical use though color of content is slightly seen white. |
| × | 5.0 or more | Poor transparency; appearance of content was dim. |

<Impact resistance>

Thirty (30) test pieces of a quadrilateral film with a thickness of 50 $\mu$m and a size of 225 mm $\times$ 250 mm were cut out from one polylactic acid resin drawn film or sheet conditioned (by leaving to stand at 23˚C for 1 week) under the standard conditions (23˚C, 65 %RH). According to ASTM-D 1709-91 (Process A), 50 % fracture energy (Dart strength; unit: mJ) was measured under the standard conditions using a dart impact testing apparatus manufactured by Toyo Seiki Seisaku-Sho, Ltd. (number of significant figures of 2). The impact resistance was evaluated based on how the Dart strength of the sample film or sheet was improved compared to the film or sheet made solely of polylactic acid polymer (A1) or (A2) in Referential Example (Dart strength ratio).

Evaluation criterion:

| Evaluation Mark | Dart strength ratio | Criterion |
|---|---|---|
| ○ | twice or more | Sufficient improvement was observed comparing to polylactic acid polymer. |
| Δ | less than twice | No sufficient improvement was observed comparing to polylactic acid polymer. |

<Film re-forming capability (recyclability)>

Polylactic acid resin raw materials composed mainly of a mixture of the polylactic acid polymer (A1) or (A2) and the biodegradable aliphatic polyesters (B1), (B2) or (B3) were dried and melt kneaded using a co-rotating biaxial extruder followed by extrusion. The extruded material was drawn as in Examples, Comparative Examples and Referential Examples described below. The resultant drawn film or sheet was pulverized to obtain a pulverized raw material. The pulverized raw material was pelletized using a uniaxial extruder to obtain a recycled raw material. The recycled raw material was subjected to the steps to obtain the polylactic acid resin raw material, which consist of drying as the polylactic acid resin raw materials, melt extrusion, drawing and pulverization, twice to obtain a recycled raw material. A film or sheet was prepared using the finally obtained recycled raw material and it was evaluated in transparency and impact resistance.

<Comprehensive Evaluation>

The transparency and impact resistance of a film or sheet prepared without using a recycled material (intrinsic properties of a film or sheet) and those of a film or sheet prepared using a recycled material (film re-forming capability) were evaluated. Comprehensive indexes for the evaluation results are shown below.

Evaluation criterion:

| Evaluation Mark | Criterion |
|---|---|
| ⊙ | Film or sheet marking neither × nor Δ in every evaluation and marking ⊙ not less than twice. The object of the present invention was achieved at the highest level. |
| ○ | Film or sheet marking neither × nor Δ in every evaluation and marking ⊙ or O. The object of the present invention was achieved at a high level. |
| Δ | Film or sheet marking not × but Δ. The object of the present invention was achieved. The film or sheet was applicable to practical use. |
| × | Film or sheet marking ×. The object of the present invention was not achieved. |

In the Examples and Comparative Examples described below, a film prepared according to a melt drawing method or a cold drawing method, which is one of the morphologies of the polylactic acid drawn film or sheet, was evaluated. Therein, as the biodegradable resin (A) having a glass transition temperature Tg of greater than or equal to 30°C, polylactic acid polymers (A1) and (A2) as shown in Table 1, which were prepared by the conventional methods such as condensation polymerization (solution method) and ring-opening polymerization (lactide method), were used. As the biodegradable resin (B) having a glass transition temperature Tg of less than or equal to 5°C, the aliphatic polyesters (B1), (B2) and (B3) as shown in Table 1 were used. Needless to say, commercially available polylactic acid polymers can be prepared according to the method as described above and can be easily obtained on the market as well as the aliphatic polyesters shown in Table 1.

The resin composition and configuration of the biodegradable resin drawn film or sheet of the present invention are not limited to the foregoing.

Example 1, Comparative Example 1 and Reference Example 1

In Example 1, Comparative Example 1 and Reference Example 1 shown in Table 2, evaluation was made on polylactic acid resin drawn films prepared according to the cold drawing method, each of which was composed of the polylactic acid polymer (A1) or (A2) and the aliphatic polyester (B1), (B2) or (B3) shown in Table 1 with a composition ratio as shown in Table 2 (unit: parts by weight; (A) + (B) = 100 parts).

The drawing process to form a film consisted of the steps of dry blending each resin raw material shown in Table 1 to the compositions of Table 2, melt kneading the dry blended resin raw materials using a co-rotating biaxial extruder, extruding the resin with a resin temperature of 200°C in the form of a board using a T die with various sizes of a die lip opening as shown in Table 2 so that the area ratio based on the die lip opening (ratio of die lip opening size to drawn film thickness) be the drawing ratios as shown in Table 2, quenching the extruded board with a casting roll at 35°C to obtain a substantially amorphous sheet having a thickness of 600 μm followed by heating to 75°C, subjecting the heated sheet to roll-drawing at a drawing ratio of 3 in the MD direction and then tenter-drawing at a drawing ratio of 4 in the TD direction at a drawing temperature of 80°C, and then cooling the film being kept in the drawn state to the room temperature to obtain drawn films with the thickness shown in Table 2. The recycled raw materials were formed into drawn films according to the process as described above.

Figs. 1 to 4 are examples of photographs of 40,000 and 20,000 time enlarged cross sectional views in the thickness direction of samples cut out from the polylactic acid drawn film, Film No.2 of Example 1 prepared using a virgin raw material, in the MD direction and TD direction (wherein the longer side of the photograph is MD or TD direction of the film and the shorter side thereof is the thickness direction of the film). These figures show that the phase (B) domains (black portions in the photographs) in the phase (A) are separated into microphases which are mainly in the configuration of lamellar or rod-shaped pieces and dispersed almost in parallel to the external surface of the film or sheet; that interfaces of lamellar pieces are also present at the portions where an apparent thickness (D) of lamellar or rod-shaped piece is greater than or equal to 150 nm because of partial overlapping of lamellar pieces; and that lamellar or rod-shaped pieces are each isolated and dispersedly present. Also, the figures show that the thickness (D) of a lamellar or rod-shaped piece is about 75 nm at maximum and the length (L) thereof is mostly about 1 μm or longer.

As seen from the evaluation results shown in Table 2, the films of Example 1 prepared according to the cold drawing method, which have a thickness (D) of lamellar or rod-shaped piece of less than or equal to 125 nm, a weight ratio of (A)/(B) of 90/10 to 60/40 and an area ratio based on the die lip opening (a ratio of die lip opening size to drawn film thickness) of 40 to 200, are all sufficient in transparency, impact resistance and film re-forming capability (recyclability). Especially, Film Nos. 1 to 3 of Example 1 having a weight ratio of (A)/(B) of 90/10 to 75/25 are good in transparency. Particularly, the films prepared using the aliphatic polyester (B1) or (B2) obtained by polycondensing mainly aliphatic dicarboxylic acid and aliphatic diol as the aliphatic polyester (B) and the films prepared using greater than or equal to 20 % of an amorphous polylactic acid having a low optical purity as the polylactic acid polymer (Film Nos. 5 and 6 of Example 1) were remarkably excellent in transparency. The Film No. 2 of Comparative Example 1 having a lamellar or rod-shaped piece thickness (D) similar to the conventional films, i.e., greater than or equal to 150 nm, was not sufficiently improved in transparency and impact resistance. Particularly, the films prepared using recycled raw materials were considerably deteriorated in transparency, that is, they were poor in the film re-forming capability (recyclability). The film of Reference Example 1 prepared using virgin raw materials had Dart strength of 600 mJ and was defined as Radix 1 of the Dart strength ratio of the films according to the cold drawing method in Table 2.

Example 2, Comparative Example 2 and Reference Example 2

In Example 2, Comparative Example 2 and Reference Example 2 shown in Table 2, evaluation was made on polylactic acid resin drawn films prepared according to the melt drawing method, each of which was composed of the polylactic acid polymer (A1) or (A2) and the aliphatic polyester (B1), (B2) or (B3) shown in Table 1 with a composition ratio as shown in Table 2 (unit: parts by weight; (A) + (B) = 100 parts).

The drawing process to form a film consisted of the steps of dry blending each resin raw material shown in Table 1 to the compositions of Table 2, melt kneading the dry blended resin raw materials using a co-rotating biaxial extruder, extruding the resin with a resin temperature of 200˚C in the form of a ring using a circular die with various sizes of a die lip opening as shown in Table 2 so that the area ratio based on the die lip opening (ratio of die lip opening to drawn film thickness) be the drawing ratios as shown in Table 2, drawing the ring in the molten state at a blow up ratios of 2.5 in the TD direction and 8 to 16 in the MD direction while cooling with an air cooling ring, and then cooling the film being kept in the drawn state to the room temperature to obtain drawn films with the thickness shown in Table 2. The recycled raw materials were formed into drawn films according to the process as described above.

Fig. 5 is an example of a photographs of 40,000 time enlarged cross sectional view in the thickness direction of samples cut out from the polylactic acid drawn film, Film No.2 of Example 2 prepared using a recycled raw material, in the MD direction. As well as Figs. 1 to 4, Fig. 5 shows that the phase (B) domains (black portions in the photograph) in the phase (A) are separated into microphases which are mainly in the configuration of lamellar or rod-shaped pieces and dispersed almost in parallel to the external surface of the film or sheet; that interfaces of lamellar pieces are also present at the portions where an apparent thickness (D) of lamellar or rod-shaped piece is greater than or equal to 150 nm because of partial overlapping of lamellar pieces; and that lamellar or rod-shaped pieces are each isolated and dispersed. Also, the figure shows that the thickness (D) of a lamellar or rod-shaped piece is about 125 nm at maximum and the length (L) thereof is mostly about greater than or equal to 1 $\mu$m.

As seen from the evaluation results shown in Table 2, the films of Example 2 prepared according to the melt drawing method, which have a thickness (D) of lamellar or rod-shaped piece of less than or equal to 125 nm, a weight ratio of (A)/(B) of 90/10 to 60/40 and an area ratio based on the die lip opening (a ratio of die lip opening size to drawn film thickness) of greater than or equal to 40, were all sufficient in transparency, impact resistance and film re-forming capability (recyclability). Especially, Film Nos. 1 to 3 of Example 2 having a weight ratio of (A)/(B) of 90/10 to 75/25 were good in transparency. The Film of Comparative Example 2 having a lamellar or rod-shaped piece thickness (D) similar to the conventional films, i.e., greater than or equal to 150 nm, was not sufficiently improved in transparency and impact resistance. Particularly, the films prepared using recycled raw materials were considerably deteriorated in transparency, that is, they were poor in the film re-forming capability (recyclability). The film of Reference Example 2 prepared using virgin raw materials had Dart strength of 80 mJ and was defined as Radix 1 of the Dart strength ratio of the films according to the cold drawing method in Table 2.

Table 1

| Name | Type of resin | Mw | Tm | Tg | Remarks |
|------|---------------|-----|-----|-----|---------|
| Polylactic acid polymer **(A1)** | Crystalline polylactic acid having L/D = 96/4 (OP (A) = 92%) | 280,000 | 158˚C | 58˚C | |
| Polylactic acid polymer **(A2)** | Amorphous polylactic acid having L/D = 87/13 (OP (B) = 74%) | 310,000 | --- | 57˚C | |
| Aliphatic polyester **(B1)** | Polybutylene succinate-adipate copolymer | 190,000 | 95˚C | -45˚C | Bionoile® of Showa Highpolymer Co., Ltd. |
| Aliphatic polyester **(B2)** | Polybutylene succinate | 160,000 | 114˚C | -28˚C | Bionolle® of Showa Highpolymer Co., Ltd. |
| Aliphatic polyester **(83)** | Polycaprolactone | 70,000 | 60˚C | -60˚C | Celgreen® of Daicel Chemical Industries, Ltd. |

Table 2

| | | | Cold drawing method — Ex.1 No.1 | No.2 | No.3 | No.4 | No.5 | No.6 | No.7 | Ref. Ex.1 | Comp. Ex.1 No.1 | No.2 | No.3 | Melt drawing method — Ex.2 No.1 | No.2 | No.3 | No.4 | Ref. Ex.2 | Comp. Ex.2 |
|---|---|---|---|---|---|---|---|---|---|---|---|---|---|---|---|---|---|---|---|
| Polylactic acid resin Composition (wt.part) | Polylactic acid (A) | A1 | 90 | 87 | 75 | 60 | 60 | 60 | 60 | 100 | 50 | 75 | 75 | | | 60 | | | |
| | | A2 | | | | | 15 | 15 | 15 | | | | | 90 | 75 | 15 | 60 | 100 | 75 |
| | Aliphatic polyester (B) | B1 | 10 | 13 | 25 | 40 | 25 | | | | 50 | 25 | | | | 25 | 40 | | |
| | | B2 | | | | | | 25 | | | | | | | 25 | | | | |
| | | B3 | | | | | | | 25 | | | | 25 | 10 | | | | | 25 |
| Film or sheet thickness (F): μm | | | 50 | 50 | 50 | 50 | 50 | 50 | 50 | 50 | 50 | 50 | 50 | 50 | 50 | 50 | 50 | 50 | 50 |
| Die lip opening (C): mm | | | 6 | 6 | 6 | 6 | 6 | 10 | 2 | 1 | 6 | 1 | 11 | 2 | 2 | 2 | 2 | 1 | 1 |
| Area ratio based on die lip opening (C)/(F) | | | 120 | 120 | 120 | 120 | 120 | 200 | 40 | 20 | 120 | 20 | 220 | 40 | 40 | 40 | 40 | 20 | 20 |
| Intrinsic property | Lamellar or rod-shaped piece thickness (D): nm | | 50 | 75 | 75 | 100 | 50 | 50 | 100 | — | 100 | 150 | *Stable production of films could not be conducted.* | 75 | 100 | 100 | 100 | — | 150 |
| | Transparency / Haze: % | | O 3.2 | O 3.5 | O 3.6 | Δ 4.2 | ◉ 2.3 | ◉ 2.4 | O 3.8 | O 3.0 | × 7.3 | × 6.1 | | ◉ 0.9 | ◉ 1.6 | ◉ 1.8 | O 3.0 | ◉ 0.3 | × 5.5 |
| | Impact resistance / Dart strength ratio (relative to Referential Example) | | O 3.0 | O 3.2 | O 3.2 | O 3.3 | O 3.1 | O 3.3 | O 3.0 | — 1(600) | O 3.5 | × 1.6 | | O 2.3 | O 3.1 | O 3.0 | O 4.0 | — 1(80) | O 2.2 |
| Film re-forming capability (use of recycled raw material) | Lamellar or rod-shaped piece thickness (D): nm | | 75 | 100 | 100 | 125 | 75 | 75 | 125 | — | 125 | 200 | | 100 | 125 | 125 | 125 | — | 200 |
| | Transparency / Haze: % | | O 3.5 | O 3.8 | O 3.9 | Δ 4.8 | ◉ 2.6 | ◉ 2.7 | Δ 4.4 | O 3.2 | × 19 | × 15 | | ◉ 1.2 | ◉ 2.2 | ◉ 2.4 | O 3.8 | ◉ 0.6 | × 11 |
| | Impact resistance / Dart strength ratio (relative to Referential Example) | | O 2.6 | O 2.7 | O 2.7 | O 2.8 | O 2.6 | O 2.7 | O 2.5 | × 0.8 | O 3.0 | × 1.3 | | O 2.1 | O 2.7 | O 2.6 | O 3.7 | × 0.8 | × 1.8 |
| Comprehensive evaluation | | | O | O | O | Δ | ◉ | ◉ | Δ | × | × | × | × | ◉ | ◉ | ◉ | O | × | × |

**Industrial Applicability**

The biodegradable resin drawn film or sheet of the present invention exhibits biodegradability under the natural circumstances and has excellent transparency, impact resistance and film re-forming capability (recyclability). Further, it is advantageously used as articles in the form of a heat shrinkable or heat non-shrinkable drawn film or sheet, wrapped articles therewith and composite materials thereof, specifically a shrinkable film or sheet used for over-wrapping lunch boxes, containers for prepared food or the like and a non-shrinkable film or sheet used for bags with a zip or the like.

**Claims**

1.  A biodegradable resin drawn film or biodegradable resin drawn sheet comprising a mixture comprising (A) a biodegradable resin having a glass transition temperature Tg of greater than or equal to 30˚C according to the differential scanning calorimetry (JIS-K 7121) and (B) a biodegradable resin having a glass transition temperature of less than or equal to 5˚C according to the differential scanning calorimetry (JIS-K 7121) wherein: the weight ratio of (A)/(B) is 90/10 to 60/40; a multiplicity of domains comprising component (B) in the configuration of lamellar or rod-shaped pieces are present in a continuous phase comprising component (A); said lamellar or rod-shaped pieces are substantially in parallel to the external surface of the film or sheet; and the thickness (D) of said lamellar or rod-shaped pieces is less than 150 nm per piece.

2.  The biodegradable resin drawn film or biodegradable resin drawn sheet according to claim 1, wherein the component (A) and/or (B) is a biodegradable polyester.

3.  The biodegradable resin drawn film or biodegradable resin drawn sheet according to claim 1 or claim 2, wherein the component (A) is a polylactic acid polymer derived mainly from L-lactic acid and/or D-lactic acid.

4.  The biodegradable resin drawn film or biodegradable resin drawn sheet according to any one of claims 1 to 3, wherein a weight ratio (A)/(B) is 90/10 to 75/25.

5.  The biodegradable resin drawn film or biodegradable resin drawn sheet according to any one of claims 1 to 4, wherein the component (A) comprises a composition prepared by mixing (A1) a crystalline polylactic acid having an optical purity OP (A1) and (A2) an amorphous polylactic acid having an optical purity OP (A2) and which composition satisfies the following equations (1) and (2):

$$(1) \quad 80\ \% \leq OP\,(A1) \leq 100\ \%, \quad 0\ \% \leq OP\,(A2) < 80\ \%$$

$$(2) \quad 20\ \% \leq [A2] / ([A1] + [A2]) \leq 100\ \%$$

    wherein [A1] + [A2] = 100 %, [A1] represents a weight ratio (unit: %) of the crystalline polylactic acid (A1), and [A2] represents a weight ratio (unit: %) of the amorphous polylactic acid (A2).

6.  The biodegradable resin drawn film or biodegradable resin drawn sheet according to any one of claims 2 to 5, wherein the component (B) is at least one polycondensed aliphatic polyester derived from an aliphatic dicarboxylic acid and an aliphatic diol or at least one polycondensed aliphatic aromatic polyester derived from an aromatic dicarboxylic acid, an aliphatic dicarboxylic acid and an aliphatic diol.

7.  The biodegradable resin drawn film or biodegradable resin drawn sheet according to claim 6, wherein the polycondensed aliphatic polyester or the polycondensed aliphatic aromatic polyester is selected from the group consisting of polyethylene adipate, polypropylene adipate, polybutylene adipate, polyhexene adipate, polyethylene succinate, polypropylene succinate, polybutylene succinate, polybutylene succinate adipate, polyethylene terephthalate succinate and polybutylene adipate terephthalate.

8.  The biodegradable resin drawn film or biodegradable resin drawn sheet according to any one of claims 1 to 7, which has a haze value measured by using a hazemeter (ASTM-D 1003-95) of less than 5 %.

9. A composite film or composite sheet comprising at least one layer which is a biodegradable resin drawn film or biodegradable resin drawn sheet according to any one of claims 1 to 8.

10. A process for producing a biodegradable resin drawn film or biodegradable resin drawn sheet according to any one of claims 1 to 7 which comprises the steps of melt extruding a mixture
comprising (A) a biodegradable resin having a glass transition temperature Tg of greater than or equal to 30°C according to the differential scanning calorimetry (JIS-K 7121) and (B) a biodegradable resin having a glass transition temperature of less than or equal to 5°C according to the differential scanning calorimetry (JIS-K 7121) and wherein the weight ratio of (A)/(B) is 90/10/ to 60/40, and drawing in at least one
direction until the thickness of the ultimate film or sheet becomes greater than or equal to 1/200 times and less than or equal to 1/40 times the height of the die lip opening (in other words, until the area of the ultimate film or sheet becomes greater than or equal to 40 times and less than or equal to 200 times as large as the area of the film or sheet just extruded from the die lip).

11. The process for producing a biodegradable resin drawn film or biodegradable resin drawn sheet according to claim 10, wherein after the mixture comprising two types of the biodegradable resins is melt extruded from the die lip and drawn in the molten state in at least one direction until the thickness becomes greater than or equal to 1/20 times and less than or equal to 1/2 times the height of the die lip opening (in other words, until the area becomes greater than or equal to 2 times and less than or equal to 20 times as large as the area of the film or sheet just extruded from the die lip), the film or sheet is quenched to make it substantially amorphous and then drawn in at least one direction.

**Patentansprüche**

1. Biologisch abbaubarer gereckter Harzfilm oder biologisch abbaubare gereckte Harzfolie, umfassend ein Gemisch, umfassend (A) ein biologisch abbaubares Harz mit einer Glasübergangstemperatur Tg von größer oder gleich 30°C gemäß Differenzialscanningkalorimetrie (JIS-K 7121) und (B) ein biologisch abbaubares Harz mit einer Glasübergangstemperatur von weniger oder gleich 5°C gemäß Differenzialscanningkalorimetrie (JIS-K 7121), wobei das Gewichtsverhältnis von (A)/(B) 90/10 bis 60/40 beträgt, wobei eine Mehrzahl von Bereichen, die die Komponente (B) in der Konfiguration von lamellaren oder stäbchenförmigen Strukturen umfassen, in einer durchgängigen Phase vorliegen, die die Komponente (A) umfasst, wobei die lamellaren oder stäbchenförmigen Strukturen im Wesentlichen parallel zu der äußeren Oberfläche des Films oder der Folie vorliegen, und wobei die Dicke (D) der lamellaren oder stäbchenförmigen Strukturen weniger als 150 nm pro Stück beträgt.

2. Biologisch abbaubarer gereckter Harzfilm oder biologisch abbaubare gereckte Harzfolie nach Anspruch 1, wobei die Komponente (A) und/oder (B) ein biologisch abbaubarer Polyester ist.

3. Biologisch abbaubarer gereckter Harzfilm oder biologisch abbaubare gereckte Harzfolie nach Anspruch 1 oder Anspruch 2, wobei die Komponente (A) ein Polymilchsäurepolymer ist, welches hauptsächlich von L-Milchsäure und/oder D-Milchsäure abgeleitet ist.

4. Biologisch abbaubarer gereckter Harzfilm oder biologisch abbaubare gereckte Harzfolie nach einem der Ansprüche 1 bis 3, wobei das Gewichtsverhältnis (A)/(B) 90/10 bis 75/25 beträgt.

5. Biologisch abbaubarer gereckter Harzfilm oder biologisch abbaubare gereckte Harzfolie nach einem der Ansprüche 1 bis 4, wobei die Komponente (A) eine Zusammensetzung umfasst, die erzeugt wird durch Mischen (A1) einer kristallinen Polymilchsäure mit einer optischen Reinheit OP (A1) und (A2) einer amorphen Polymilchsäure mit einer optischen Reinheit OP (A2), und welche Zusammensetzung die folgenden Gleichungen (1) und (2) erfüllt:

$$(1) \qquad 80\ \% \leq OP\ (A1) \leq 100\ \%,\ 0\ \% \leq OP\ (A2) < 80\ \%$$

$$(2) \qquad 20\ \% \leq [A2]/([A1] + [A2] \leq 100\ \%,$$

wobei [A1] + [A2]=100 %, wobei [A1] einen Gewichtsanteil (Einheit: %) der kristallinen Polymilchsäure (A1) repräsentiert, und wobei [A2] einen Gewichtsanteil (Einheit: %) der amorphen Polymilchsäure (A2) repräsentiert.

6. Biologisch abbaubarer gereckter Harzfilm oder biologisch abbaubare gereckte Harzfolie nach einem der Ansprüche 2 bis 5, wobei die Komponente (B) wenigstens ein polykondensierter aliphatischer Polyester ist, der von einer aliphatischen Dicarbonsäure und einem aliphatischen Diol abgeleitet ist, oder wenigstens ein polykondensierter aliphatischaromatischer Polyester ist, der von einer aromatischen Dicarbonsäure, einer aliphatischen Dicarbonsäure und einem aliphatischen Diol abgeleitet ist.

7. Biologisch abbaubarer gereckter Harzfilm oder biologisch abbaubare gereckte Harzfolie nach Anspruch 6, wobei der polykondensierte aliphatische Polyester oder der polykondensierte aliphatisch-aromatische Polyester aus der Gruppe ausgewählt ist, die aus Polyethylenadipat, Polypropylenadipat, Polybutylenadipat, Polyhexenadipat, Polyethylensukzinat, Polypropylensukzinat, Polybutylensukzinat, Polybutylensukzinatadipat, Polyethylenterephthalatsukzinat und Polybutylenadipatterephthalat besteht.

8. Biologisch abbaubarer gereckter Harzfilm oder biologisch abbaubare gereckte Harzfolie nach einem der Ansprüche 1 bis 7, welcher bzw. welche einen Trübungswert, der unter Verwendung eines Trübungsmessgeräts (ASTM-D 1003-95) gemessen wird, von weniger als 5 % aufweist.

9. Verbundfilm oder Verbundfolie, welcher bzw. welche wenigstens eine Schicht aufweist, die ein biologisch abbaubarer gereckter Harzfilm oder eine biologisch abbaubare gereckte Harzfolie nach einem der Ansprüche 1 bis 8 ist.

10. Verfahren zur Erzeugung eines biologisch abbaubaren gereckten Harzfilms oder einer biologisch abbaubaren gereckten Harzfolie nach einem der Ansprüche 1 bis 7, welches die Stufen umfasst, bei denen man ein Gemisch schmelzextrudiert, welches (A) ein biologisch abbaubares Harz umfasst, das eine Glasübergangstemperatur Tg von größer oder gleich 30˚C gemäß Differenzialscanningkalorimetrie (JIS-K 7121) aufweist, und (B) ein biologisch abbaubares Harz mit einer Glasübergangstemperatur von weniger oder gleich 5˚C gemäß Differenzialscanningkalorimetrie (JIS-K 7121), und wobei das Gewichtsverhältnis von (A)/(B) 90/10 bis 60/40 beträgt, und bei denen man in wenigstens eine Richtung reckt bis die Dicke des endgültigen Films oder der endgültigen Folie größer oder gleich 1/200-fach und weniger oder gleich 1/40-fach die Höhe der Werkzeuglippenöffnung wird (in anderen Worten: bis die Fläche des endgültigen Films oder der endgültigen Folie größer oder gleich 40-fach und weniger oder gleich 200-fach so groß wird wie die Fläche des Films oder der Folie, wie er oder sie gerade von der Werkzeuglippe extrudiert wurde).

11. Verfahren zur Erzeugung eines biologisch abbaubaren gereckten Harzfilms oder einer biologisch abbaubaren gereckten Harzfolie nach Anspruch 10, wobei, nachdem das Gemisch, welches zwei Typen des biologisch abbaubaren Harzes umfasst, von der Werkzeuglippe schmelzextrudiert wurde und im geschmolzenen Zustand in wenigstens eine Richtung gereckt wurde bis die Dicke größer oder gleich 1/20-fach und weniger oder gleich 1/2-fach die Höhe der Werkzeuglippenöffnung geworden ist (in anderen Worten: bis die Fläche größer oder gleich 2-fach und weniger oder gleich 20-fach so groß wie die Fläche des Films oder der Folie, wie er oder sie gerade von der Werkzeuglippe extrudiert wurde), der Film oder die Folie abgeschreckt wird, um ihn oder sie im Wesentlichen amorph zu machen, und dann in wenigstens eine Richtung gereckt wird.

## Revendications

1. Film étiré en résine biodégradable ou feuille étirée en résine biodégradable comprenant un mélange comprenant (A) une résine biodégradable ayant une température de transition vitreuse Tg supérieure ou égale à 30 ˚C d'après la calorimétrie à balayage différentiel (JIS-K 7121) et (B) une résine biodégradable ayant une température de transition vitreuse supérieure ou égale à 5 ˚C d'après la calorimétrie à balayage différentiel (JIS-K 7121) où : le rapport massique (A)/(B) est de 90/10 à 60/40 ; une multiplicité de domaines comprenant le composant (B) dans la configuration de pièces lamellaires ou en forme de tige sont présents dans une phase continue comprenant le composant (A) ; lesdites pièces lamellaires ou en forme de tige sont sensiblement parallèles à la surface externe du film ou de la feuille ; et l'épaisseur (D) desdites pièces lamellaires ou en forme de tige est inférieure à 150 mm par pièce.

2. Film étiré en résine biodégradable ou feuille étirée en résine biodégradable selon la revendication 1, dans lequel le composant (A) et/ou (B) est un polyester biodégradable.

**3.** Film étiré en résine biodégradable ou feuille étirée en résine biodégradable selon la revendication 1 ou la revendication 2, dans lequel le composant (A) est un polymère poly(acide lactique) dérivé principalement d'acide L-lactique et/ou d'acide D-lactique.

**4.** Film étiré en résine biodégradable ou feuille étirée en résine biodégradable selon l'une quelconque des revendications 1 à 3, dans lequel un rapport massique (A)/(B) est de 90/10 à 75/25.

**5.** Film étiré en résine biodégradable ou feuille étirée en résine biodégradable selon l'une quelconque des revendications 1 à 4, dans lequel le composant (A) comprend une composition préparée en mélangeant (A1) un poly(acide lactique) cristallin ayant une pureté optique PO(A1) et (A2) un poly(acide lactique) amorphe ayant une pureté optique PO(A2) et la composition satisfaisant les équations (1) et (2) suivantes :

$$(1)\ 80\ \% \le PO(A1) \le 100,\ 0\ \% \le PO(A2) < 80\ \%$$

$$(2)\ 20\ \% \le [A2]/([A1] + [A2]) \le 100\ \%$$

où [A1] + [A2] = 100 %, [A1] représente un rapport massique (unité : %) du poly(acide lactique) cristallin, et [A2] représente un rapport massique (unité : %) du poly(acide lactique) amorphe (A2).

**6.** Film étiré en résine biodégradable ou feuille étirée en résine biodégradable selon l'une quelconque des revendications 2 à 5, dans lequel le composant (B) est au moins un polyester aliphatique polycondensé dérivé d'un acide aliphatique dicarboxylique et d'un diol aliphatique ou au moins un polyester aromatique aliphatique polycondensé dérivé d'un acide aromatique dicarboxylique, d'un acide aliphatique dicarboxylique et d'un diol aliphatique.

**7.** Film étiré en résine biodégradable ou feuille étirée en résine biodégradable selon la revendication 6, dans lequel le polyester aliphatique polycondensé ou le polyester aromatique aliphatique polycondensé est choisi dans le groupe constitué par le poly(adipate d'éthylène), le poly(adipate de propylène), le poly(adipate de butylène), le poly(adipate d'hexène), le poly(succinate d'éthylène), le poly(succinante de propylène), le poly(succinate de butylène), le poly (succinate adipate de butylène), le poly(téréphtalate succinate d'éthylène) et le poly(adipate téréphtalate de butylène).

**8.** Film étiré en résine biodégradable ou feuille étirée en résine biodégradable selon l'une quelconque des revendications 1 à 7, qui a une valeur de voile mesurée à l'aide d'un dispositif de mesure de voile (norme ASTM-D 1003-95) inférieure à 5 %.

**9.** Film composite ou feuille composite, comprenant au moins une couche qui est un film étiré en résine biodégradable ou une feuille étirée en résine biodégradable selon l'une quelconque des revendications 1 à 8.

**10.** Procédé de production d'un film étiré en résine biodégradable ou d'une feuille étirée en résine biodégradable selon l'une quelconque des revendications 1 à 7, qui comprend les étapes d'extrusion à l'état fondu d'un mélange comprenant (A) une résine biodégradable ayant une température de transition vitreuse Tg supérieure ou égale à 30 ˚C d'après la calorimétrie à balayage différentiel (JIS-K 7121) et (B) une résine biodégradable ayant une température de transition vitreuse supérieure ou égale à 5 ˚C d'après la calorimétrie à balayage différentiel (JIS-K 7121) où : le rapport massique (A)/(B) est de 90/10 à 60/40, et d'étirage dans au moins une direction jusqu'à ce que l'épaisseur du film ultime ou de la feuille ultime devienne supérieure ou égale à 1/200 fois et inférieure ou égale à 1/40 fois la hauteur de l'ouverture de la lèvre de filière (autrement dit, jusqu'à ce que la surface du film ultime ou de la feuille ultime devienne supérieure ou égale à 40 fois et inférieure ou égale à 200 fois la surface du film ou de la feuille juste extrudé à partir de la lèvre de la filière).

**11.** Procédé de production d'un film étiré en résine biodégradable ou d'une feuille étirée en résine biodégradable selon la revendication 10, dans lequel après que le mélange comprenant deux types de résines biodégradables est extrudé à l'état fondu à partir de la lèvre de la filière et étiré à l'état fondu dans au moins une direction jusqu'à ce que l'épaisseur devienne supérieure ou égale à 1/20 fois et inférieure ou égale à 1/2 fois la hauteur de l'ouverture de la lèvre de filière (autrement dit, jusqu'à ce que la surface devienne supérieure ou égale à 2 fois et inférieure ou égale à 20 fois la surface du film ou de la feuille juste extrudé à partir de la lèvre de la filière), le film ou la feuille est trempé pour le rendre sensiblement amorphe puis étiré dans au moins une direction.

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9111107 A
- JP 2000273207 A
- JP 2001130183 A
- JP 2001151906 A
- JP 7002987 A
- JP 9031171 A

**Non-patent literature cited in the description**

- **Saburo Akiyama et al.** Polymer Blend. CMC Publishing Co, Ltd, 173